# EUROPEAN PATENT APPLICATION

(11) **EP 4 508 999 A1**
(43) Date of publication of application: **19.02.2025**
(21) Application number: 24194880.1
(22) Date of filing: 16.08.2024
(51) Int. Cl.: A41D 19/00

(54) **GLOVE AND METHOD FOR PRODUCING GLOVE**

(30) Priority: 18.08.2023 JP 2023133603
(71) Applicant: Showa Glove Co., Hyogo 670-0802 (JP)
(72) Inventor: YONEMITSU, Hosei, Hyogo, 670-0802 (JP)
(74) Representative: Isarpatent

(57) **Abstract**

A glove includes a globe body made of fiber, and a porous coating layer formed to cover at least a part of a surface of the glove body, and composed of a polyurethane resin composition comprising polyurethane and conductive carbon black. The conductive carbon black is carbon black having a primary particle size of 30 nm or more and 50 nm or less, a BET specific surface area of 250 m²/g or more and 1500 m²/g or less, and a DBP (dibutyl phthalate) oil absorption of 250 ml/100 g or more and 600 ml/100 g or less.

## Description

### [Cross-references to related applications]

The present application claims priority to Japanese Patent Application No. 2023-133603, the disclosure of which is incorporated herein by reference in its entirely.

### FIELD

The present disclosure relates to a glove, and a method for producing a glove.

### BACKGROUND

Recently, devices including capacitive touch panels (e.g., smartphones, etc.) have been increasing. The capacitive touch panel operates when a conductive material such as a human body (e.g., a fingertip) approaches the touch panel, capacitive coupling is generated between the human body and the touch panel, and detects the position at which the capacitive coupling value changes as the touch position. On the other hand, wearing gloves may weaken the capacitive coupling and decrease the reactivity of the touch panel. To suppress this decrease in reactivity, an attempt has been made to impart conductivity to the gloves. Electrostatic capacitance or the like can be changed in the touch panel that is in close proximity to or in contact with the glove by the conductivity imparting, and can be detected as a touch position.

For example, JP 2022-190847 A discloses a glove imparted with conductivity. The glove includes a conductive portion exposed to the outer surface of the palm side, in which the conductive portion includes rubber as a main component and carbon black as an additive, in which the addition amount of the carbon black based on 100 mass parts of rubbers is 0.6 mass parts or more and 9.5 mass parts or less, and the surface resistance value of the conductive portion is 10³ Ω or more and 10⁸ Ω or less. JP 2022-190847 A describes that, when the addition amount of carbon black is as described above, it is considered that a large number of conductive paths along which carbon blacks connected together are extended are ensured, and it is possible to obtain a high conductivity.

### SUMMARY

### Technical Problem

When the touch panel is operated, it is desirable to use a glove which is as flexible as possible because it involves fine movement of the fingers. If swiping (an operation in which a fingertip is slid in a specific direction on the touch panel while touching the touch panel with the fingertip) is repeatedly performed daily, there is a problem that a glove that is too soft gradually wears out and eventually breaks. While this problem is unavoidable, it is desirable to improve the abrasion resistance of the glove as much as possible to produce a relatively long-lasting conductive glove.

Accordingly, an object of the present disclosure is to provide a glove having conductivity, flexibility and abrasion resistance, and a method for producing the glove.

### Solution to Problem

To solve the above problem, a glove according to one embodiment includes a glove body made of fiber, and a porous coating layer formed so as to cover a surface of at least a portion of the glove body and composed of a polyurethane resin composition including polyurethane and conductive carbon black. The conductive carbon black is carbon black having a primary particle size of 30 nm or more and 50 nm or less, a BET specific surface area of 250 m²/g or more and 1500 m²/g or less, and a DBP (dibutyl phthalate) oil absorption of 250 ml/100 g or more and 600 ml/100 g or less.

A method for producing a glove according to one embodiment includes a step of dipping at least a portion of the glove body made of fiber in a polyurethane resin solution including a polyurethane resin, conductive carbon black, and a hydrophilic solvent, and a step of extracting the hydrophilic solvent by dipping the glove body with the polyurethane resin solution adhering thereto in a water-containing extraction liquid, in which the conductive carbon black is carbon black having a primary particle size of 30 nm or more and 50 nm or less, a BET specific surface area of 250 m²/g or more and 1500 m²/g or less, and a DBP (dibutyl phthalate) oil absorption of 250 ml/100 g or more and 600 ml/100 g or less.

### BRIEF DESCRIPTION OF DRAWINGS

Fig. 1A shows a photograph acquired by photographing an appearance of a glove (for the left hand), specifically an outer surface of the palm side of this glove according to one embodiment.
Fig. 1B shows a photograph acquired by photographing an appearance of the glove (for the left hand), specifically an outer surface of the back side of this glove according to one embodiment.
Fig. 2 is a flow diagram illustrating an example of a method for producing a glove.

### DETAILED DESCRIPTION OF THE PREFERRED EMBODIMENT

### Glove

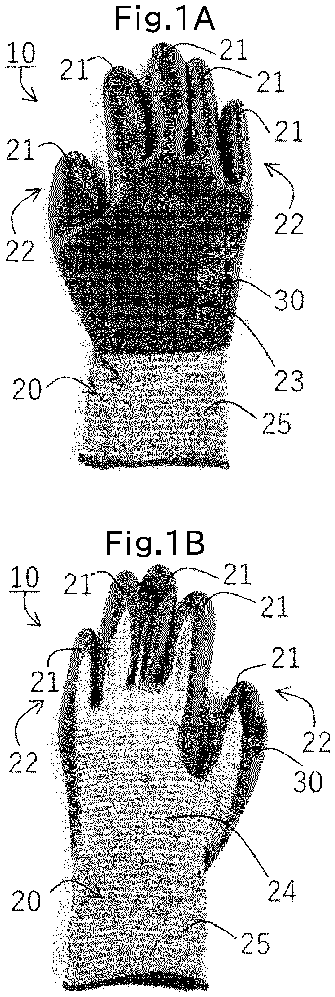

Hereinafter, embodiments of the present disclosure will be described with reference to the drawings. As shown in Fig. 1A and Fig. 1B, a glove 10 according to one embodiment includes a glove body 20 made of fiber, and a porous coating layer 30 formed on the glove body 20.

The glove body 20 is a textile product that is knitted in a glove shape by a plurality of yarns and configured to be worn to cover the hand of the user of the glove 10. Each yarn in the plurality of yarns forming the glove body 20 includes fiber. The glove body 20 can include a finger portion 22 that is arranged to cover the fingers, a palm portion 23 that is arranged to cover the palm, a back portion 24 that is arranged to cover the back of the hand, and a sleeve portion 25 that is arranged to cover the wrist, when the glove is worn. These portions (22, 23, 24 and 25) in the glove body 20 may be seamlessly knitted or may be joined by sewing to form the glove body 20 as a whole.

The fiber included in each yarn in the plurality of yarns forming the glove body 20 is not particularly limited as long as it is a fiber that can be used generally in the production of gloves and has such flexibility hardly deteriorating fine movement of the fingers, and it is a fiber made unless contrary to the purpose of the present disclosure, such as synthetic fiber, semi-synthetic fiber, regenerated fiber, vegetable fiber or animal fiber. Examples of the synthetic fiber include acrylic fiber, polyethylene fiber, polyester fiber, polyamide fiber, and polyurethane fiber. Examples of the semi-synthetic fiber include acetate fiber and triacetate fiber. Examples of the regenerated fiber include rayon fiber, cupra fiber and polynosic fiber. Examples of the vegetable fiber include cotton fiber and hemp fiber. Examples of the animal fiber include wool and silk.

The fiber included in each yarn in the plurality of yarns forming the glove body 20 is preferably one or more fibers selected from polyamide fiber, polyester fiber, and polyethylene fiber, from the viewpoint of having such flexibility as to enable easy movement of the fingers and some degree of abrasion resistance. Polyamide fiber is fiber made of polymer in which a number of monomers are linked by amide bonds, examples of which include nylon fiber such as nylon 6 or nylon 66, and aramid fiber such as Kevlar (TM) or Normex (TM). Polyester fiber is fiber made from polycondensate of polyvalent carboxylic acids and polyols, examples of which include fiber such as fiber of polyethylene terephthalate, polytrimethylene terephthalate, polybutylene terephthalate, polyethylene naphthalate or polybutylene naphthalate. Polyethylene fiber is fiber of polymer having a structure in which ethylene is polymerized, examples of which include fiber of high density polyethylene (HDPE) having less branches in the molecular structure, having a specific gravity of 0.94 or more and a specific gravity of 1.00 or less or 0.98 or less or 0.97 or less, fiber of low density polyethylene (LDPE) having a long chain branching in the molecular structure and having a specific gravity of 0.91 or more and 0.92 or less, or fiber of linear low density polyethylene (LLDPE) made by introduction of a comonomer so as to have a specific gravity of 0.91 or more and 0.925 or less.

A fiber included in each yarn in the plurality of yarns forming the glove body 20 may be one fiber or a combination of two or more fibers suitably selected according to the purpose of use of the glove 10. For example, when the use of high-strength fiber is required, fiber of high-strength polyethylene, fiber of poly(paraphenylene terephthalamide), fiber of high-strength polyarylate, or fiber in which Mohs hardness of 3 or more particles are dispersed in any of these fibers is preferred. When dust generation prevention is required, filament fiber such as polyester fiber, polyamide fiber, rayon fiber, polynosic fiber, polyethylene fiber or aramid fiber is preferred.

The fineness of each yarn in the plurality of yarns forming the glove body 20 may be, for example, 33 dtex or more, preferably 44 dtex or more, more preferably 55 dtex or more, from the viewpoint of imparting a certain degree of strength to the glove body 20. The fineness of each yarn in the plurality of yarns forming the glove body 20 may be, for example, 467 dtex or less, 440 dtex or less, preferably 300 dtex or less, more preferably 200 dtex or less, from the viewpoint of the difficulty in preventing fine movement of the fingers during touch panel operation.

The glove body 20 can be knitted with a plurality of yarns including conductive fibers to a degree not contrary to the object of the present disclosure. Various conductive fibers and conductive yarns including the conductive fibers can be used, and for example, conductive fibers, or a plurality of yarns respectively including conductive fibers can be used as described in Japanese Patent No. 5762290. However, since it may be somewhat less flexible to include conductive fibers, the glove body 20 is preferably knitted with a plurality of yarns that do not include conductive fibers from the viewpoint of increasing flexibility. Further, if not contrary to the object of the present disclosure, the finger portion 22 and the palm portion 23 of the glove body 20 may be provided with a plurality of convex portions made of resin or rubber as described in, for example, Japanese Patent No. 6018919, as non-slip protrusions.

The thickness between the inner surface and the outer surface of the glove body 20 (the thickness of the portion where the porous coating layer 30 is not formed in the glove body 20) can be, for example, 0.3 mm or more, preferably 0.4 mm or more, from the viewpoint of preventing the glove 10 from being unexpectedly bent. The thickness of the glove body 20 can be, for example, 1.0 mm or less, or 0.8 mm or less, preferably 0.6 mm or less, from the viewpoint of imparting flexibility to the glove body 20, which flexibility hardly prevents fine movement of the fingers. The thicknesses described here are the average values of the measurement results at five locations using the constant pressure thickness measuring instrument manufactured by Teclock Co., Ltd. (model: PG-15, pressure at the time of measurement: 240gf/cm², area of the distal end of the probe: 1cm²).

The porous coating layer 30 is a resin coating formed so as to cover at least a part of the surface of the glove body 20. Which part of the glove body 20 to form the porous coating layer 30 can be appropriately determined in accordance with the intended use of the wearer of the glove 10, and shall not be particularly limited unless contrary to the object of the present disclosure. Fig. 1A and Fig. 1B each show the porous coating layer 30 which is formed so as to coat the entire surface of the palm side area in the finger portion 22 and the palm portion 23 of the glove body 20, but this is only an example. The porous coating layer 30 can be formed over the entire surface of one or more portions selected from a fingertip portion 21, the finger portion 22, the palm portion 23, the back portion 24, and the sleeve portion 25 of the glove body 20. The fingertip portion 21 is a portion covering the fingertips of the wearer, out of the finger portion 22. From the viewpoint of producing the glove 10 suitable for touch panel operation, the porous coating layer 30 is preferably formed so as to coat the surface of at least the fingertip portion 21. Alternatively, the porous coating layer 30 can be formed on the entire outer surface of the glove body 20, or it can be formed over the entire surface of only the fingertip portion 21 or only the palm portion 23.

The porous coating layer 30 has a porous structure composed of a polyurethane resin composition including polyurethane and conductive carbon black. In other words, it can be said that the porous coating layer 30 is composed of polyurethane in which conductive carbon black is dispersed. By the use of polyurethane, the porous coating layer 30 is easy to be flexible and have a high moisture permeability. Further, since the porous coating layer 30 is composed of a polyurethane resin composition including polyurethane as a main component, it is possible to provide the glove 10 with the glove body 20 having a porous structure by wet processing to be described later (wet coagulation) when the glove 10 is produced.

Polyurethane is a polymer having a urethane bond (-NH-COO-). Polyurethane is formed, for example, by a polyaddition reaction of a compound having an isocyanate group and a compound having a hydroxy group. Polyurethane included in the polyurethane resin composition forming the porous coating layer 30 is not particularly limited unless contrary to the object of the present disclosure, polyether-based polyurethane (polyurethane having an ether bond in polymerization unit) is preferable from the viewpoint of high moisture permeability and less likely to hydrolyze, or polyester-based polyurethane (polyurethane having an ester bond in polymerization unit) is preferable from the viewpoint of excellent mechanical strength (tensile strength, etc.) and capability of easily forming the porous coating layer 30.

The conductive carbon black herein is carbon black having a primary particle size of 30 nm or more and 50 nm or less, a BET (Brunauer-Emmett-Teller) specific surface area of 250m²/g or more and 1500m²/g or less, and a DBP (dibutyl phthalate) oil absorption of 250 ml/100 g or more and 600 ml/100 g or less. That is, the conductive carbon black can also be said to be carbon black having a small particle size, a hollow structure, and a large specific surface area as compared with a general other type of carbon black. Conductive carbon black satisfying the primary particle size, the BET specific surface area, and the DBP oil absorption described above is commercially available as carbon black generally with a registered mark of "Ketjen Black". In addition, compared with the other type of carbon black, conductive carbon black(e.g., Ketjen black) tends to impart relatively high conductivity to polyurethane even if only a relatively small amount is added to an insulating material that is polyurethane. Probably, conductive carbon black that has physical properties satisfying the primary particle size, the BET specific surface area, and the DBP oil absorption described above is more likely to be stably dispersed in polyurethane than the other type of carbon black, and is likely to be conductive between dispersed conductive carbon black particles and thereby exhibits conductivity. The value of the primary particle size herein is a value obtained by acquiring an electron microscope image in which primary particles of carbon black are dispersed according to the procedure described in ASTM D3849 standard (Standard Test Method for Carbon Black-Morphological Characterization by Electron Microscopy), measuring particle sizes of 3000 particles as a unit constituent particle from this image, and obtaining the average value of the measured values by calculation. The value of the BET specific surface area herein is a value of the nitrogen adsorption specific surface area measured by a method conforming to JIS K 6217. The value of the DBP oil absorption amount herein is a value of the DBP absorption amount measured by a method conforming to JIS K 6221.

Conductive carbon black preferably has a BET specific surface area of 500 m²/g or more and 1000 m²/g or less from the viewpoint of conductivity, dispersibility, chemical stability, or the like. For the same reason, conductive carbon black preferably has a DBP (dibutyl phthalate) oil absorption of 300 ml/100g or more and 500 ml/100g or less. For the same reason, conductive carbon black preferably has a primary particle size of, for example, 37 nm or more and 41 nm or less. For the same reason, conductive carbon black can have a pH at 25 °C of, for example, 6.0 or more and less than 10.0, and preferably has 8.0 or more and less than 9.5. Examples of commercially available conductive carbon blacks include Ketjen Black EC300J (BET surface area: 800 m²/g, DBP oil absorption: 365 ml/100g, primary particle size: 40 nm, pH: 9.0), or Ketjen Black EC600JD (BET surface area: 1270 m²/g, DBP oil absorption: 495 ml/100g, primary particle size: 34 nm, pH: 9.0, manufactured by Lion Specialty Chemicals Co., Ltd.).

From the viewpoint of imparting the conductivity and the abrasion resistance to the porous coating layer 30 by an appropriate amount of conductive carbon black so as to be easily dispersed in polyurethane, the polyurethane resin composition forming the porous coating layer 30 can include, for example, 1.0 mass parts or more of conductive carbon black based on 100 mass parts of a polyurethane resin component, preferably 2.0 mass parts or more, more preferably 3.0 mass parts or more. Further, from the viewpoint of avoiding the decrease in conductivity and abrasion resistance by aggregation of the particles of conductive carbon black in polyurethane, the polyurethane resin composition can include, for example, 8.0 mass parts or less of conductive carbon black based on 100 mass parts of a polyurethane resin component, and includes preferably 6.0 mass parts or less, more preferably 5.0 mass parts or less.

The porous structure of the porous coating layer 30 is a structure including a number of fine cells. Each cell in this large number of fine cells is formed of a thin film of a polyurethane resin composition (polyurethane in which conductive carbon black is dispersed). The porous coating layer 30 having such a porous structure is excellent in flexibility by a large number of fine cells as compared with a non-porous resin film made of a polyurethane resin composition. Although it will be described in detail later, in view of excellent flexibility, the porous coating layer 30 is preferably a wet coagulated product having a porous structure formed from a polyurethane resin solution including polyurethane, conductive carbon black and a hydrophilic solvent, in which the hydrophilic solvent is substituted with water.

In view of being suitable for touch panel operation and excellent abrasion resistance, the porous coating layer 30 is preferably formed in the entire thickness of at least a portion of the glove 10 from the inner surface which the wearer's hand touches when the glove 10 is worn to the outer surface of the glove 10. That is, the porous coating layer 30 is preferably formed in the thickness direction of the glove 10 in at least a portion of the glove 10, not only covering the outer surface of the glove body 20, but also encompassing the fibers of the yarns included in the plurality of yarns forming the glove body 20 while extending to the inner surface of the glove body 20. In this case, a portion formed on the inner surface of the glove body 20 in the porous coating layer 30 preferably forms at least a part of the inner surface of the glove 10 which the wearer's hand touches when the glove 10 is worn.

In view of excellent flexibility imparted by cells, the porous structure in the porous coating layer 30 is formed to have a volume of air inside the porosity of the porous coating layer 30 being preferably 80 volume % or more and 93 volume % or less of the volume of the porous coating layer 30, more preferably 86 volume % or more and 91.2 volume % or less. In other words, the porous coating layer 30 is composed of a polyurethane resin composition including polyurethane and conductive carbon black, and a volume ratio occupied by the polyurethane resin composition in the porous coating layer 30 is preferably 7 volume % or more and 20 volume % or less, more preferably 8.8 volume % or more and 14 volume % or less. The value of the volume % of air in the porous coating layer 30 is a value simply calculated from the mixing ratio of the polyurethane resin solution used as a raw material of the porous coating layer 30, when forming the porous coating layer 30 by wet processing (wet coagulation) as described later in the production of a glove 10. The reason for this is that, when forming the porous coating layer 30, a hydrophilic solvent included in the polyurethane resin solution as a raw material (e.g., N, N-dimethylformamide (hereinafter referred to as DMF) or the like) is substituted with an extraction liquid (preferably water), which causes a porous polyurethane resin composition formed into a porous state to be coagulated, then causes the extraction liquid to be vaporized from inside the porosity, and air to flow into the porosity, and thus the porous structure with air flown into the porosity to be formed. Therefore, for example, it is estimated that air inside the porosity occupies about 90 volume % in the formed porous coating layer 30, provided that the content of the hydrophilic solvent in the polyurethane resin solution, which is a raw material of the porous coating layer 30, is about 90 volume %. That is, it is desirable that the porous coating layer 30 is derived from a polyurethane resin solution that includes polyurethane, conductive carbon black and the hydrophilic solvent, and the content of the hydrophilic solvent is preferably 80 weight % or more and 93 weight % or less, more preferably 86 weight % or more and 91.2 weight % or less.

In the portion of the glove body 20 where the porous coating layer 30 is formed, the thickness between the inner surface and the outer surface of the glove 10 can be, for example, 0.50 mm or more, preferably 0.60 mm or more, more preferably 0.70 mm or more, from the viewpoint of imparting abrasion resistance to the glove 10. The thickness of less than 0.30 mm would not be desirable, since the glove is too thin to withstand the practical use. Further, in the portion of the glove body 20 where the porous coating layer 30 is formed, the thickness between the inner surface and the outer surface of the glove 10 can be, for example 1.10 mm or less, preferably 1.00 mm or less, more preferably 0.95 mm or less, from the viewpoint of imparting flexibility to the glove 10, which flexibility hardly prevents fine movement of the fingers during touch panel operation. The thickness mentioned here is the average value of the measurement results at five locations within the central area of the portion in which the porous coating layer 30 is formed in the glove 10 using the constant pressure thickness measuring instrument manufactured by Teclock Co., Ltd. (model: PG-15, pressure at the time of measurement: 240gf/cm², area of the tip of the measuring probe: 1cm²). In the case where the porous coating layer 30 is formed in the palm portion 23 as illustrated in Fig. 1A, the average value of the measurement results at five positions in the central part of the palm portion 23 or in the vicinity of the central part of the palm portion 23 is designated as the thickness of the glove 10.

From the viewpoint of excellent touch panel operability, in the portion where the porous coating layer 30 is formed in the glove body 20, the ratio of the thickness of the porous coating layer 30 to the thickness of the glove body 20 (thickness of the porous coating layer 30 / thickness of the glove body 20), for example, can be larger than 1.00, preferably 1.02 or more, more preferably 1.05 or more. That is, it is preferable that the porous coating layer 30 be formed with the polyurethane resin composition being impregnated into the fibers of each of the yarns forming the glove body 20 so as to encompass these yarns and fibers. From the viewpoint of further excellent abrasion resistance, the ratio described above (the thickness of the porous coating layer 30 / the thickness of the glove body 20) can be, for example, 1.50 or less, preferably 1.30 or less, more preferably 1.20 or less.

From the viewpoint of excellent flexibility of the glove 10, it is preferable that the porous coating layer 30 be formed entirely in the thickness direction between the outer surface and the inner surface of at least a portion of the glove body 20, and the porous coating layer 30 be formed so as to form cells each having a relatively large inner diameter between the yarns which form stitches in the glove body 20. The inner diameter of each of the cells in the portion where the porous coating layer 30 is formed in the inner surface of the glove 10 (the surface on the side in contact with the wearer's hand) in the glove 10 is preferably 70 µm or more, more preferably 80 µm or more, more preferably 90 µm or more from the same viewpoint. On the other hand, from the viewpoint of keeping the abrasion resistance of the glove 10 at high to a certain degree, the inner diameter of each of the cells in the portion where the porous coating layer 30 is formed in the inner surface of the glove 10 (the surface on the side in contact with the wearer's hand) in the glove 10 can be 700 µm or less, can be 550 µm or less, or can be 400 µm or less. The cell is not limited to a closing cell having no opening due to the polyurethane resin composition and the fibers of the glove body 20 covering the entire circumference of the cell, and can be a recessed open cell having an opening on the inner surface of the glove 10. The inner diameter of the cells here is an arithmetic average value of the inner diameters of five cells, in the case where a piece cut from the portion where the porous coating layer 30 is formed in the glove body 20 is used as a test piece, and the test piece is cut to have a cut surface which is observed by the scanning electron microscope (JEOL Ltd., JSM-6060LA). In the case where the porous coating layer 30 is formed in the entire palm portion 23, the test piece is cut from a central part of the palm portion 23. Further, the inner diameter of each cell here is a maximum value obtained by measuring the length of the inner diameter of each cell in a direction parallel to the direction along the inner surface of the glove body 20 (the length of the distance between the inner wall surfaces facing each other in each cell) in a photographed image of the cut surface. In other words, in the photographed image of the cut surface, for a cell, the inner diameter of which varies along a direction orthogonal to the direction along the inner surface of the glove body 20, the inner diameter measured value (maximum value of the inner diameter measurement value) at a place at which the inner diameter is largest is designated as the inner diameter of the cell.

The degree of abrasion resistance for the portion where the porous coating layer 30 is formed in the glove body 20 varies depending on, for example, the volume ratio of air in the cells in the porous structure, the constitution of the polyurethane resin composition, or the fineness of the yarn used in knitting of the glove body 20. The abrasion resistance of the portion where the porous coating layer 30 is formed is evaluated based on the number of abrasion rubs by the evaluation test according to the "6.1 Abrasion resistance" of "Protective gloves against mechanical risks" of the European Unified Standard EN388: 2016, and, for example, the portion can have an abrasion resistance evaluated with the number of abrasion rubs of 1000 times or more, preferably 2000 times or more, more preferably 5000 times or more. A description will be hereinbelow given on the summary of such an evaluation test. An evaluation test for abrasion resistance is conducted under dry conditions. Nu- Martindale as specified in EN ISO 12947-1 is used as a testing machine, and Klingspor PL31B 180 grit is used as an abradant. A test piece, cut out from the central area of the portion where the porous coating layer 30 is formed in the glove 10 is a circular cut piece having a diameter of 38 mm. When the porous coating layer 30 is formed on the palm portion 23, a cut piece having a diameter of 38 mm cut out from the central part of the palm portion 23 is used as the test piece. The test is conducted in the environment with a temperature of 23±2°C and a relative humidity of 50±5%. In the evaluation test of abrasion resistance, first, the test piece is attached to the jig using the double-sided adhesive tape so as to press the test piece onto the abradant by the jig of the testing machine. Then, the test piece is worn by circumferentially moving the jig on the abradant, and thereby circumferentially moving the test piece with the jig on the abradant. The number of times of circumferentially moving the jig (the number of abrasion rubs) is count until the test piece is broken (e.g., until a through cell is generated in the test piece). The more the number of abrasion rubs the test piece has, it is evaluated to be excellent in abrasion resistance.

From the viewpoint of having a conductivity suitable for the operation of the capacitive touch panel, the surface resistivity of the portion where the porous coating layer 30 is formed in the glove body 20 can be, for example, 1.0 × 10¹⁰ Ω / sq. or less, preferably 1.0 × 10⁹ Ω / sq. or less, more preferably 1.0 × 10⁸ Ω / sq. or less, which are measured values of the surface resistivity by the evaluation test according to the European Standard EN1149-1. The surface resistivity can be, for example, 1.0 × 10³ Ω/sq. or more, 1.0 × 10⁴ Ω/sq. or more, 1.0 × 10⁵ Ω/sq. or more, and 1.0 × 10⁶ Ω/sq. or more. In such an evaluation test of the surface resistivity, a circular cut piece having a diameter of about 10 cm is cut out from the portion where the porous coating layer 30 is formed in the glove body 20 of the glove 10, and is used as a test piece. The test piece is placed on a support base, an upper surface of which is an insulating surface. Further, a concentric ring electrode having an anode and a cathode connected to the resistivity measuring device (manufactured by Monroe Electronics Co., Ltd., "Model 272A") (applied voltage: 100 V for 1.0 × 10⁶ Ω or more, 10V for less than 1.0 × 10⁶ Ω) is set on the test piece, and a measured surface resistivity after 15 seconds for the current flowing through the surface portion of the test piece, which surface portion is disposed between the anode and the cathode, is read to be designated as a surface resistivity of the portion where the porous coating layer 30 is formed. The measurement is conducted under the conditions with a room temperature of 23±1°C and a humidity of 25±5%.

From the viewpoint of easily eliminating static electricity charged on the glove 10 wearer, the volumetric resistance value of the portion where the porous coating layer 30 is formed in the glove body 20 is such that a measured value of the volume resistance value by the evaluation test according to the European Standard EN1149-2 can be, for example, 1.0 × 10¹⁰ Ω or less, preferably 1.0 × 10⁹ Ω or less, more preferably 1.0 × 10⁸ Ω or less. The volume resistance value can be, for example, 1.0 × 10³ Ω or more, 1.0 × 10⁴ Ω or more, 1.0 × 10⁵ Ω or more, or 1.0 × 10⁶ Ω or more. In the evaluation test for such volumetric resistance value, a circular cut piece having a diameter of about 10 cm is cut out from the portion where the porous coating layer 30 is formed in the glove body 20 of the glove 10, and is used as a test piece. The test piece is placed on a support base connected to the resistance value measuring device (manufactured by Monroe Electronics Co., Ltd., "Model 272A") (applied voltage: 100 V for 1.0 × 10⁶ Ω or more, 10 V for less than 1.0 × 10⁶. Further, a concentric ring electrode connected to the resistivity measuring device is set on the test piece, and a measured value of the volume resistance value after 15 seconds for the current flowing through the test piece between the support base functioning as an electrode and the concentric ring electrode is read to be designated as a volume resistance value of the portion where the porous coating layer 30 is formed. The measurement is conducted under the conditions with a room temperature of 23±1°C and a humidity of 25±5%.

From the viewpoint of having a conductivity suitable for operation of the capacitive touch panel, the composite resistance value of the glove 10 wearer's hand (human body) and the portion where the porous coating layer 30 is formed by the glove body 20 when wearing the glove 10 can be, for example, 1.0 × 10¹⁰ Ω or less, preferably 1.0 × 10⁹ Ω or less, more preferably 1.0 × 10⁸ Ω or less. The composite resistance value can be, for example, 1.0 × 10⁵ Ω or more, 1.0 × 10⁶ Ω or more. Such composite resistance value is the value of the composite resistance value measured by the evaluation method according to the standard RCJS-5-1 of the Japan Electronic Component Reliability Center when the subject who wears the glove 10 while wearing a wrist strap connected to the resistance measuring device (manufactured by PROSTAT Co., Ltd., "PRS-801") touches the finger suck resistance measuring electrode (manufactured by PROSTAT Co., Ltd., "PCF-825") connected to the resistance measuring device through the portion where the porous coating layer 30 is formed in the glove 10. In the case where the porous coating layer 30 is formed on the fingertip portion 21 of the glove 10, the wearer touches the finger sack resistance measuring electrode through the fingertip portion 21 to measure the composite resistance value.

### [Method for producing a glove]

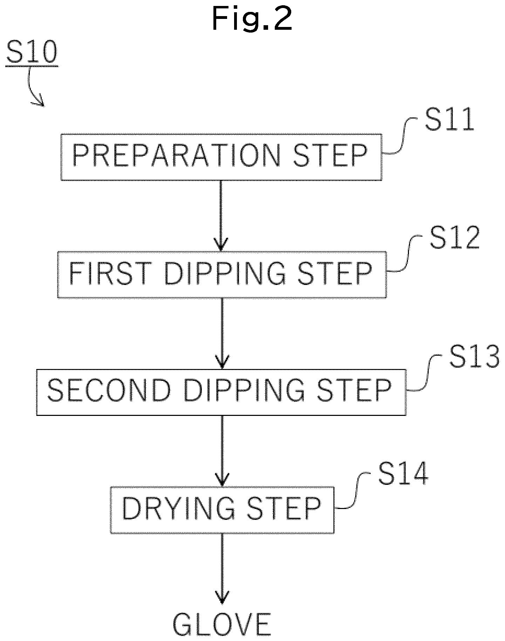

A producing method S10 according to one embodiment is a method for producing the glove 10 by forming the porous coating layer 30 by subjecting the glove body 20 to wet processing (wet coagulation process). For this purpose, the producing method S10 can include a preparation step S11, a first dipping step S12, and a second dipping step S13, as shown in Fig. 2.

In the preparation step S11, in order to produce a glove 10, a glove body in a state where the porous coating layer 30 is not formed (hereinafter also referred to as "base glove") and a polyurethane resin solution are prepared. The base glove to be prepared is composed of a plurality of yarns. Each of the plurality of yarns is a yarn including a fiber. The polyurethane resin solution to be prepared is a solution including polyurethane, conductive carbon black (e.g., Ketjen black), and a hydrophilic solvent. As described above, the polyurethane resin solution to be prepare preferably has a mass ratio of the hydrophilic solvent being 80 volume % or more and 93 volume % or less. In other words, the polyurethane resin solution to be prepared is preferably a composition that has a content of a solid content including polyurethane and conductive carbon black being 7.0 voume% or more and 20 volume % or less. The polyurethane resin solution to be prepared can optionally further include a known surfactant or dispersant. The details of the glove body (base glove) and conductive carbon black to be prepared have already been described in the description of the glove 10.

In the preparation step S11, a commercially available polyurethane resin solution that does not include conductive carbon black can be used as a raw material for preparing a polyurethane resin solution including conductive carbon black described above. Examples of the commercially available polyurethane resin solution which can be used herein include Crisvon (registered trademark, hereinafter the same) 8366HV, Crisvon MP-812, Chris Bon 8006HVLD, Crisvon MP-802 (manufactured by DIC Corporation.), SANPRENE (registered trademark, hereinafter the same) LQ-X37L, SANPRENE LQ-3358, SANPRENE LQ-3313A (manufactured by Sanyo Chemical Industries, Ltd.), RESAMINE (registered trademark, hereinafter the same) CU-4340, RESAMINE CU-4310HV, and RESAMINE CU-4210 (manufactured by Dainichiseika Color & Chemicals Mfg. Co., Ltd.). These commercially available resin solutions can be used by being diluted in known solvents, such as DMF, dimethylacetamide, dimethylsulfoxide, or N-methylpyrrolidone, which are hydrophilic solvents compatible with both polyurethane and water. These can be used alone or can be used in combination with two or more.

A polyurethane resin solution is a composition that includes conductive carbon black (e.g., Ketjen black), the content of which can be 1.0 mass parts or more and 8.0 mass parts or less, preferably 2.0 mass parts or more and 6.0 mass parts or less, still more preferably 3.0 mass parts or more and 5.0 mass parts or less based on 100 mass parts of a polyurethane resin component.

The polyurethane resin solution can be mixed with a crosslinking agent such as isocyanate or oxazoline. The mixing amount of the crosslinking agent can be such that the solid content of the crosslinking agent can be, for example, 10 mass parts or less, preferably 5 mass parts or less, based on 100 mass parts of the polyurethane resin component.

It is preferable to prepare a polyurethane resin solution such that the content of the polyurethane resin solid is 4 weight % or more and 17 weight % or less, and the viscosity of the solution at a liquid temperature of 20 °C is 50 mPa · s or more and 1000 mPa · s or less. By increasing the polyurethane resin solid content and viscosity, a porous film with relatively less cells is formed to increase the abrasion resistance. Alternatively, by lowering the content of the polyurethane resin solid and viscosity, a porous coating with relatively large cells is formed, which is preferable from the viewpoint of improving the flexibility.

In the first dipping step S12, the glove body (base glove) is attached to a hand mold for dipping, and at least a part of the glove body (base glove) attached to the hand mold is dipped in a polyurethane resin solution. At this time, the porous coating layer 30 is formed later on the part dipped in the polyurethane resin solution. Which part of the glove body (base glove) is to be dipped in the polyurethane resin solution can be appropriately selected depending on the purpose of use of the glove 10 to be produced. Dipping in the polyurethane resin solution allows the polyurethane resin solution to impregnate and adhere to at least a part of the glove body (base glove). Then, the glove body (base glove) attached to the hand mold is pulled up from the polyurethane resin solution to remove an excess resin solution which is dripping.

When the glove body (base glove) is dipped in the first dipping step S12, the liquid temperature of the polyurethane resin solution can be, for example 10 °C or higher and 40 °C or lower from the viewpoint of suppressing excessive volatilization of the solvent and preventing dew condensation. The temperature of the hand mold can be, for example, 10 °C or higher and 100 °C or lower, when it is attached with the glove body (base glove) and dipped in the polyurethane resin solution, and is preferably 20 °C or higher and 70 °C or lower from the viewpoint of easily adhering the polyurethane resin solution to the glove body (base glove) .

The material and the shape of the hand mold are not particularly limited unless contrary to the object of the present disclosure. Examples of the material of the hand mold include pottery, iron, and aluminum. The surface of the hand mold can be patterned. The hand mold can be coated with, for example, a fluorine resin or a silicone resin from the viewpoint of rust prevention and workability improvement. The shape of the hand mold is a three-dimensional reproduction of the human hand, and it can be arbitrarily determined such as according to the number of fingers, the length and the thickness of each of the fingers, the length of the palm circumference, or the length of the wrist circumference. A mitten shape or the like may be used as needed.

In the second dipping step S13, the glove body (base glove) attached to the hand mold and having the polyurethane resin solution adhering thereto is dipped in an extraction liquid. The extraction liquid is not limited, unless contrary to the object of the present disclosure, as long as it is water or an aqueous solution capable of extracting and substituting a hydrophilic solvent (e.g., DMF) included in the polyurethane resin solution adhering to the glove body (base glove), and the extraction liquid is preferably water. From the viewpoint of efficiently forming the porous coating layer 30, the temperature of the extraction liquid (preferably water) here is preferably, for example, 20 °C or higher and 70 °C or lower. From the same viewpoint, it is preferable to make adjustment so that the temperature of the extract liquid is kept constant while the glove body is dipped in the extract liquid. By dipping in the extraction liquid, the hydrophilic solvent included in the adhering polyurethane resin solution is substituted with water included in the extraction liquid, and extracted into the extraction liquid. By this substitution and extraction, the adhering polyurethane resin solution is gelated in a porous state.

In the second dipping step S13, it is preferable to dip the glove body (base glove) in the extraction liquid for a certain time so that the hydrophilic solvent in the polyurethane resin solution adhering to the glove body (base glove) is extracted into the extraction liquid to be substituted with water included in the extraction liquid. A required time for dipping in the second dipping step S13 can be, for example, 30 minutes or more from the viewpoint of sufficiently extracting the hydrophilic solvent, and can be, for example, 90 minutes or less from the viewpoint of bringing dipping into an equilibrium state with the hydrophilic solvent fully extracted.

In the drying step S14, the glove body pulled up from the extraction liquid is dried to vaporize water or the solvent remaining in water by a trace amount, to form a porous film layer on at least a part of the surface of the glove body. The polyurethane, which is thermoplastic, is dried at a temperature and time to the extent that melting does not occur. Thus, it is possible to obtain a glove. From the viewpoint of efficiently forming the porous coating layer, in the drying step S14, it is preferable to dry the glove body pulled up from the extraction liquid, for example, for 20 minutes or more and 60 minutes or less under the environment at 100 °C or higher and 120 °C or lower.

In the producing method S10 described above, for example, when producing the glove 10 under the following conditions, it is possible and preferable to form the porous coating layer 30 with 90 volume % of air therein. In the preparation step S11, a polyurethane resin solution including polyurethane, conductive carbon black, and a hydrophilic solvent (e.g., DMF), and having a content of the hydrophilic solvent (e.g., content of DMF) of 90 weight % is prepared. In the first dipping step S12, the glove body 20 (base glove) is attached to the hand mold kept at a mold temperature of 40 °C, and the glove body 20 (base glove) attached to the hand mold is dipped in a polyurethane resin solution, the liquid temperature of which is adjusted at 20 °C. In the second dipping step S13, the glove body 20 (base glove) attached to the hand mold and having the polyurethane resin solution adhering thereto is dipped in water for 80 minutes, the liquid temperature of which is adjusted at 45 °C. In the drying step S14, the glove body pulled up from water is dried for 30 minutes in air at 100 °C.

The matters disclosed herein include the following.
(1) A glove including: a glove body made of fiber; and a porous coating layer formed to cover at least a part of a surface of the glove body, and composed of a polyurethane resin composition comprising polyurethane and conductive carbon black, in which the conductive carbon black is carbon black having a primary particle size of 30 nm or more and 50 nm or less, a BET specific surface area of 250 m²/g or more and 1500 m²/g or less, and a DBP (dibutyl phthalate) oil absorption of 250 ml/100 g or more and 600 ml/100 g or less.
(2) The glove according to Item (1) described above, wherein the porous coating layer is a wet coagulated product having a porous structure formed by wet processing.
(3) The glove according to Item (1) or (2), wherein the polyurethane resin composition includes 2.0 mass parts or more and 6.0 mass parts or less of the conductive carbon black based on 100 mass parts of a polyurethane resin component.
(4) The glove according to any one of Items (1) to (3) described above, wherein the thickness between an inner surface and an outer surface of the glove in a portion where the porous coating layer is formed in the glove body is 0.95 mm or less.
(5) The glove according to any one of Items (1) to (4) described above, wherein a surface resistivity of the porous coating layer is 1.0 × 10³ Ω / sq. or more and 1.0 × 10¹⁰ Ω / sq. or less.
(6) The glove according to any one of Items (1) to (5) described above, wherein the conductive carbon black has a primary particle size of 37 nm or more and 41 nm or less, a BET specific surface area of 500 m²/g or more and 1000 m²/g or less, and a DBP oil absorption of 300 ml/100 g or more and 500 ml/100 g or less.
(7) A method for producing a glove including: a step of dipping at least a part of a glove body made of fiber in a polyurethane resin solution including a polyurethane resin, conductive carbon black, and a hydrophilic solvent, and a step of extracting the hydrophilic solvent by dipping the glove body with the polyurethane resin solution adhering thereto in an extraction liquid comprising water, in which the conductive carbon black is carbon black having a primary particle size of 30 nm or more and 50 nm or less, a BET specific surface area of 250 m²/g or more and 1500 m²/g or less, and a DBP (dibutyl phthalate) oil absorption of 250 ml/100 g or more and 600 ml/100 g or less.
(8) The method for producing the glove according to Item (7) described above, in which the conductive carbon black has a primary particle size of 37 nm or more and 41 nm or less, a BET specific surface area of 500 m²/g or more and 1000m²/g or less, and a DBP oil absorption of 300 ml/100 g or more and 500 ml/100 g or less.

According to the glove described in Item (1) described above, the inclusion of conductive carbon black in the polyurethane resin composition forming the porous coating layer enables the porous coating layer to have conductivity and abrasion resistance due to conductive carbon black. The porous coating layer that has the porous structure has flexibility.

According to the method for producing a glove described in Item (7) described above, when at least a part of the glove body is dipped in a polyurethane resin solution, the polyurethane resin solution adheres to the at least the part of the glove body. Then, when the glove body with the polyurethane resin solution adhering thereto is dipped in an extraction liquid including water, the hydrophilic solvent included in the adhering polyurethane resin solution is substituted with water, and thereby a wet coagulated product having a porous structure due to the polyurethane resin and conductive carbon black is formed. The wet coagulated product thus serves as the porous coating layer simultaneously having conductivity and abrasion resistance due to conductive carbon black, and flexibility due to the porous structure.

The present disclosure is not limited to the embodiments described above and the like, and can be carried out in a mode with various improvements, modifications, or variations based on the knowledge of a person skilled in the art without departing from the spirit of the present disclosure. The present disclosure can be carried out in a manner in which any particular matter is replaced by other techniques to the extent that it produces the same function or effect.

### [Example]

Hereinafter, the present disclosure will be described by way of examples, while the present disclosure is not limited to the examples.

### [Raw materials]

For Examples and Comparative Examples to be described below, the following raw materials were prepared.
Other type of carbon black: ZA4100 (Manufactured by Mikuni-Color Ltd., using carbon black powder with an acidic surface property and poor conductivity. The other type of carbon black is carbon black commercially available with no mark of "Ketjen Black", and is not applicable to the conductive carbon black of the present disclosure.)
Conductive carbon black: Ketjen Black EC300J (manufactured by Lion Specialty Chemicals Co., Ltd.)
Commercially available polyurethane resin solution that does not include carbon black: Crisvon 8366HV (manufactured by DIC Corporation and including polyester-based polyurethane)
DMF: manufactured by Kishida Chemical Co., Ltd.
Glove body (base glove): A glove body was prepared by knitting a plurality of yarns into a glove shape. As each yarn in the plurality of yarns, a yarn A made of nylon fiber (two-ply yarn composed of two nylon fibers of 78 dtex each twisted, total fineness of 156 dtex) or a yarn B made of nylon fiber (yarn including two yarns A with a total fineness of 312 dtex) was used. A conductive yarn was not used. The thickness of the glove body (the thickness between the outer surface and the inner surface of the glove body as measured by the method of measuring the thickness using the constant pressure thickness measuring instrument PG-15 described above) was 0.54 mm when the yarn A was used, and 0.85 mm when the yarn B was used.

### [Example 1]

A polyurethane resin solution including conductive carbon black was prepared by mixing Ketjen black EC300J and DMF to a commercially available polyurethane resin solution without carbon black to have a solid content (the total amount of a polyurethane solid and conductive carbon black) being 10 weight % and a content of conductive carbon black being 4.0 mass parts based on 100 mass parts of a polyurethane solid. A hand mold kept at a mold temperature of 40 °C was covered with a glove body (base glove) knitted with a plurality of the yarns B made of nylon fiber. Portions including a finger portion and a palm portion of the glove body (base glove) covered on the hand mold was dipped in a polyurethane resin solution prepared and kept at a liquid temperature of 20 °C to allow the polyurethane resin solution to adhere to the portions including the finger portion and the palm portion. The glove body (base glove) with the polyurethane resin solution adhering thereto was pulled up from the polyurethane resin solution, and thereafter dipped in an extraction liquid composed of water kept at 45 °C to allow DMF included in the adhering polyurethane resin solution to be substituted with water. The glove body (base glove) was pulled up from the extract liquid (water) and dried in air at 120 °C for 25 minutes to form a porous coating layer (wet coagulated product) having a porous structure composed of the polyurethane resin composition including polyurethane and conductive carbon black in the portions including the finger portion and the palm portion of the glove body. The glove body in which the porous coating layer is formed was served as a glove according to Example 1.

The porous coating layer formed on the glove according to Example 1 had fine porosity with 90 volume % of air. Further, dispersion of particles having a particle size of 0.3 µm or less was observed by the scanning electron microscope (manufactured by JEOL Ltd., JSM-6060LA), when confirming the conductive carbon black particle size in the polyurethane resin composition forming the porous coating layer. In other words, it was suggested that conductive carbon black in the polyurethane resin composition is dispersed uniformly so as not to form secondary particles or hig-order particles of a size larger than 0.3 µm, or so as not to substantially form particles having a size to the extent that such large size particles are difficult to be confirmed by the scanning electron microscope.

### [Example 2]

In Example 2, a polyurethane resin solution was prepared by mixing Ketjen black EC 300J and DMF to Crisvon 8366HV to have a solid content (the total amount of a polyurethane solid and conductive carbon black) being 9.3 weight %, and a content of conductive carbon black being 4.0 mass parts based on 100 mass parts of a polyurethane solid content. A glove according to Example 2 was produced in the same manner as in Example 1 described above except that change was made to reduce the solid content from Example 1 described above. The porous coating layer was formed to have fine porosity with 91 volume % of air.

### [Example 3]

In Example 3, a glove was produced under the same conditions as in Example 1 described above except that change was made from Example 1 to use a glove body (base glove) knitted with a plurality of the yarns A made of nylon fiber. The porous coating layer formed on the glove according to Example 3 had fine porosity with 90 volume % of air.

### [Comparative Example 1]

In Comparative Example 1, as compared with Example 1 described above, the producing conditions were changed so as not to mix Ketjen black EC300J. That is, in Comparative Example 1, a polyurethane resin solution was prepared by mixing DMF to Crisvon 8366HV to have a solid content (a polyurethane solid content) being 10 weight %. A glove according to Comparative Example 1 was produced under the same conditions for the others as in Example 1. The porous coating layer formed had fine porosity with 90 volume % of air.

### [Comparative Example 2]

In Comparative Example 2, compared with Example 1 described above, the producing conditions were changed to mix ZA4100 (other type of carbon black) instead of Ketjen Black EC300J. That is, in Comparative Example 2, a polyurethane resin solution was prepared by mixing ZA4100 and DMF to Crisvon 8366HV to have a solid content (the total amount of a polyurethane solid content and the other type of carbon black) being 10 weight %, and a content of the other type of carbon black being 4.0 mass parts based on 100 mass parts of the polyurethane solid content. A glove according to Comparative Example 2 was produced under the same conditions for the others as in Example 1. The porous coating layer formed had fine porosity with 90 volume % of air. Further, dispersion of higher order particles having a particle size of 0.5 µm or more was observed by the scanning electron microscope (manufactured by JEOL Ltd., JSM-6060LA), when confirming the particle size of the other type of carbon black in the polyurethane resin composition forming the porous coating layer.

For the glove in each of Examples 1 to 3, and Comparative Examples 1 and 2, as described above, the abrasion resistance of the portion where the porous coating layer is formed was measured by a method according to EN 388: 2016, the surface resistivity of the portion where the porous coating layer is formed was measured by a method according to EN 1149-1, and the volume resistance value of the portion where the porous coating layer is formed was measured by a method according to EN 1149-2. The composite resistance value of the glove wearer's hand (human body) and the portion where the porous coating layer is formed in the glove body (fingertip portion) was measured by a method according to RCJS-5-1 described above. The thickness of the portion where the porous coating layer is formed was evaluated by an average value obtained by measurements at 5 locations in the central part of the palm portion where the porous coating layer is formed in the glove, according to the thickness measuring method, using the constant pressure thickness measuring instrument described above (manufactured by Teclock Co., Ltd., PG-15). In addition, it was evaluated whether or not operation such as touching a capacitive touch panel of a commercially available smartphone with the fingertip portion of each of the gloves worn by a wearer, and selecting by pressing a menu button display of the smartphone, while holding the smartphone, is possible. In addition, the workability of wearing gloves (ability to finely move fingers) and flexibility (ease of movement of fingers and gloves having good touch feeling to the skin) were evaluated according to the following criteria A to D.
A: Excellent
B: Good.
C: Usable without discomfort.
D: Uncomfortable.

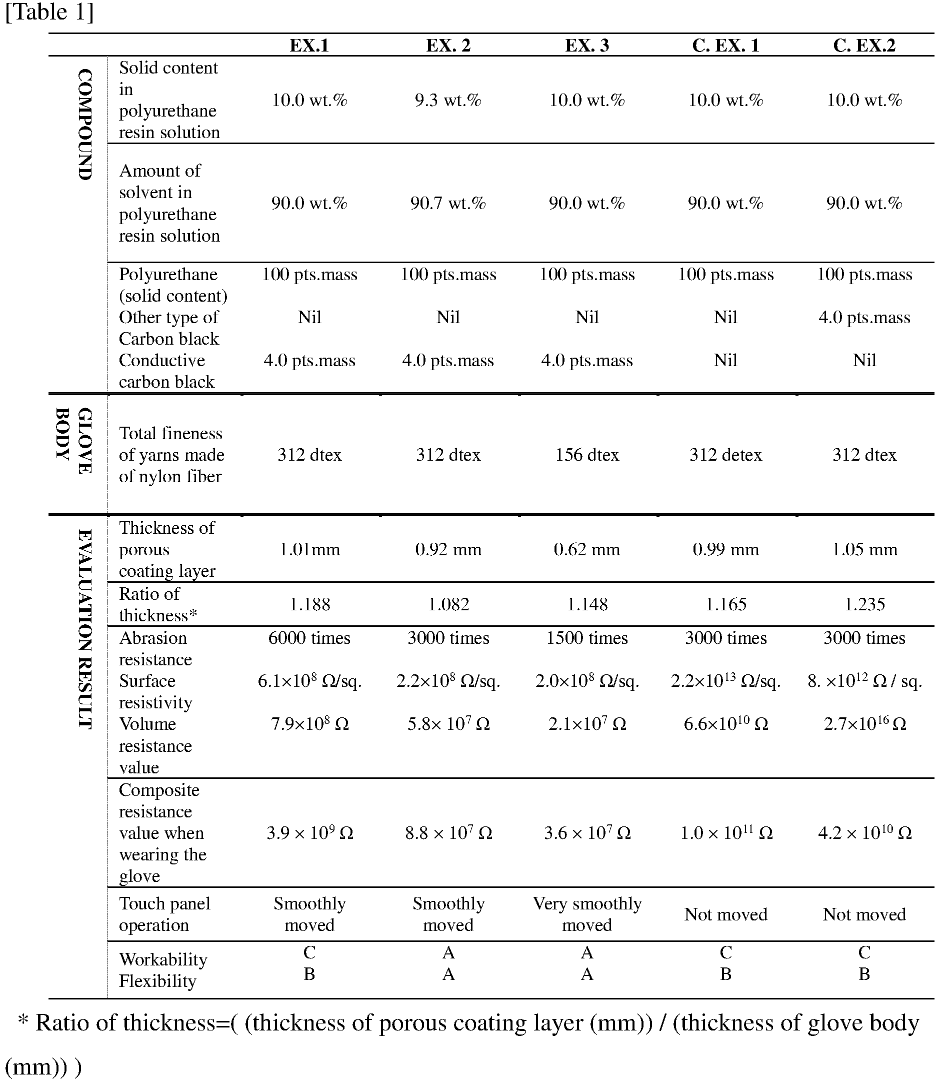

As apparent from the description of Table 1, in Example 1 mixed with conductive carbon black, the evaluation result of the abrasion resistance has been improved by 2 times, and the values of the surface resistivity and the volume resistance were significantly reduced (excellent in conductivity), as compared with Comparative Example 1 not mixed with conductive carbon black and Comparative Example 2 mixed with the other type of carbon black instead of conductive carbon black. Further, Example 2 mixed with conductive carbon black showed the same degree of abrasion resistance, despite the thickness of the glove body is as thin as 0.92 mm, as compared with Comparative Examples 1 and 2, due to the reduction of the amount of the solid content to 9.3 weight %. Example 3 mixed with conductive carbon black could withstand 1500 times of abrasion, that is, avoid significant reduction of the abrasion resistance, in spite of the glove using the yarn with the thickness as very thin as 0.62 mm, as compared with Comparative Examples 1 and 2, due to the thin yarn used in knitting the glove body (total fineness: 0.5 times). These test results suggest that the porous coating layer formed by mixing conductive carbon black is excellent not only in conductivity but also in abrasion resistance. Although it was impossible to perform the touch panel operation of the smartphone when wearing the gloves in Comparative Examples 1 and 2, Examples 1 to 3 enabled smooth touch panel operation, which showed that the gloves of Examples 1 to 3 are suitable as gloves for the touch panel operation. Example 2 with a thin thickness of 0.92 mm showed that it is excellent in workability and flexibility, as compared with Example 1, and Comparative Examples 1 and 2 with a thickness of around 1.00 mm. Further, Example 3 with a thinner thickness of 0.62 mm enabled smoother touch panel operation than Example 2, and is further excellent in workability and flexibility, which showed that a glove wearer can comfortably and easily perform touch panel operation.

The reason for excellent abrasion resistance in the case of mixing conductive carbon black (Example 1) compared with the case of mixing the other type of carbon black (Comparative Example 2) is unknown, but it is assumed that excellent abrasion resistance is achievable because conductive carbon black is easily dispersed finely in the polyurethane resin composition as compared with the other type of carbon black and therefore the formed higher order particles have a relatively small particle size. That is, first, when the porous coating layer is worn on the abradant, higher order particles of conductive carbon black or the other type of carbon black forced out of the porous coating layer are considered to function like a lubricant to relax the frictional force between the abradant and the porous coating layer. Here, since the size of the higher order particles of the other type of carbon black formed in the polyurethane resin composition is relatively large, relatively large stepped portions occur in the porous coating layer in Comparative Example 2 after the higher order particles of the other type of carbon black are forced out of the porous coating layer, and therefore the porous coating layer is considered likely to be broken from these stepped portions. In Comparative Example 2, it is assumed that the tendency of the porous coating layer, that is, the tendency of easily breaking by a relatively large stepped portion, is compensated by the lubricant effect by the carbon black particles forced out of the porous coating layer, and as a result, the abrasion resistance of Comparative Example 2 became 3000 times, which is substantially the same as Comparative Example 1 (no mixing of conductive carbon black and the other type of carbon black). On the other hand, since conductive carbon black in the polyurethane resin composition is more finely dispersed than the other type of carbon black, and the size of the higher order particles to be formed is relatively small, and stepped portions which occur in the porous coating layer after the higher order particles of conductive carbon black are forced out of the porous coating layer are relatively small, so that it is assumed that the influence of these stepped portions on the abrasion of the porous coating layer is relatively small. As a result, the porous coating layer in the case of mixing conductive carbon black is assumed to be excellent in abrasion resistance.

### REFERENCE SIGNS LIST

10: Glove
20: Glove body
21: Fingertip portion
22: Finger portion
23: Palm portion
24: Back portion
25: Sleeve portion
30: Porous coating layer
S10: Method for producing glove
S11: Preparation step
S12: First dipping step
S13: Second dipping step
S14: Drying step

## Claims

1. A glove comprising:
a globe body made of fiber; and
a porous coating layer formed to cover at least a part of a surface of the glove body, and composed of a polyurethane resin composition comprising polyurethane and conductive carbon black, wherein
the conductive carbon black is carbon black having a primary particle size of 30 nm or more and 50 nm or less, a BET specific surface area of 250 m²/g or more and 1500 m²/g or less, and a DBP (dibutyl phthalate) oil absorption of 250 ml/100 g or more and 600 ml/100 g or less.

2. The glove according to claim 1, wherein the porous coating layer is a wet coagulated product having a porous structure formed by wet processing.

3. The glove according to claim 1 or 2, wherein the polyurethane resin composition comprises 2.0 mass parts or more and 6.0 mass parts or less of the conductive carbon black based on 100 mass parts of a polyurethane resin component.

4. The glove according to any one of claims 1 to 3, wherein the thickness between an inner surface and an outer surface of the glove in a portion where the porous coating layer is formed in the glove body is 0.95 mm or less.

5. The glove according to any one of claims 1 to 4, wherein a surface resistivity of the porous coating layer is 1.0 × 10³ Ω / sq. or more and 1.0 × 10¹⁰ Ω / sq. or less.

6. The glove according to any one of claims 1 to 5, wherein the conductive carbon black has a primary particle size of 37 nm or more and 41 nm or less, a BET specific surface area of 500 m²/g or more and 1000 m²/g or less, and a DBP oil absorption of 300 ml/100 g or more and 500 ml/100 g or less.

7. A method for producing a glove comprising:
a step of dipping at least a part of a glove body made of fiber in a polyurethane resin solution comprising a polyurethane resin, conductive carbon black, and a hydrophilic solvent; and
a step of extracting the hydrophilic solvent by dipping the glove body with the polyurethane resin solution adhering thereto in an extraction liquid comprising water, wherein the conductive carbon black is carbon black having a primary particle size of 30 nm or more and 50 nm or less, a BET specific surface area of 250 m²/g or more and 1500 m²/g or less, and a DBP (dibutyl phthalate) oil absorption of 250 ml/100 g or more and 600 ml/100 g or less.

8. The method for producing the glove according to claim 7, wherein the conductive carbon black has a primary particle size of 37 nm or more and 41 nm or less, a BET specific surface area of 500 m²/g or more and 1000 m²/g or less, and a DBP oil absorption of 300 ml/100 g or more and 500 ml/100 g or less.
